# EUROPEAN PATENT SPECIFICATION

(11) **EP 2 210 435 B1**
(45) Date of publication and mention of the grant of the patent: **14.06.2017**
(21) Application number: 08804936.6
(22) Date of filing: 01.10.2008
(51) Int. Cl.: H04W 12/04, H04L 29/06, H04L 9/08, H04W 88/14

(54) **METHOD, APPARATUS AND COMPUTER PROGRAM PRODUCT FOR PROVIDING KEY MANAGEMENT FOR A MOBILE AUTHENTICATION ARCHITECTURE**
VERFAHREN, VORRICHTUNG UND COMPUTERPROGRAMMPRODUKT ZUR BEREITSTELLUNG VON SCHLÜSSELVERWALTUNG FÜR EINE MOBILAUTHENTIFIKATIONSARCHITEKTUR
PROCÉDÉ, APPAREIL ET PRODUIT PROGRAMME D'ORDINATEUR PERMETTANT D'OBTENIR UNE GESTION DE CLÉ POUR UNE ARCHITECTURE D'AUTHENTIFICATION MOBILE

(30) Priority: 05.10.2007 US 867808
(43) Date of publication of application: 28.07.2010
(73) Proprietor: Nokia Solutions and Networks Oy, 02610 Espoo (FI)
(72) Inventor: HOLTMANNS, Silke, FIN-01800 Klaukkala (FI); LAITINEN, Pekka, FIN-00800 Helsinki (FI); TUOMINEN, Hannu, FIN-02700 Kauniainen (FI)
(74) Representative: Borgström, Markus
(86) International application number: PCT/EP2008/063110
(87) International publication number: WO 2009/043859

(56) References cited:
- US-A1- 2006 036 733
- SECRETARY OF 3GPP TSG-SA WG3: "Draft Report of SA WG3 meeting #47" 3GPP DRAFT; S3_47_DRAFT_REP_V009RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_sa\WG3_Security\TSGS3_48_Montreal\Docs , no. Montreal; 20070710, 5 July 2007 (2007-07-05), XP050280118
- JONES J P ET AL: "Layering Public Key Distribution Over Secure DNS using Authenticated Delegation" COMPUTER SECURITY APPLICATIONS CONFERENCE, 21ST ANNUAL TUCSON, AZ, USA 05-09 DEC. 2005, PISCATAWAY, NJ, USA,IEEE, 5 December 2005 (2005-12-05), pages 409-418, XP010869959 ISBN: 978-0-7695-2461-0
- 3GPP: "3rd Generation Partnership Project;Technical Specification Group Services and System Aspects; Liberty Alliance and 3GPP Security Interworking;Interworking of Liberty Alliance ID-FF, ID-WSF and Generic Authentication Architecture(Release 7)" 3GPP DRAFT; ATT-S3-060178-TR33980-LAP-200, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_sa\WG3_Security\TSGS3_42_Bangalore\Out put, no. Bangalore; 20060206, 27 February 2006 (2006-02-27), XP050278550
- SECRETARY OF 3GPP TSG-SA WG3: "Draft Report of SA WG3 meeting #49" 3GPP DRAFT; SP-070781_S3_49_DRAFT_REP_V020, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_sa\TSG_SA\TSGS_38\Docs, no. Mexico; 20071203, 23 November 2007 (2007-11-23), XP050210255

## Description

### FIELD OF THE INVENTION

Embodiments of the present invention relate generally to wireless technology and, more particularly, relate to key management within a mobile authentication architecture such as, for example, a Generic Bootstrapping Architecture (GBA).

### BACKGROUND

Security of mobile terminals, such as portable communication devices (PCDs) (e.g., cellular telephones), portable digital assistants (PDAs), laptop computers, or any suitable device that is capable of communicating with a wireless network, is increasingly important to mobile terminal users. Security algorithms are often employed to achieve security between a mobile terminal and another network entity. These security algorithms often rely upon a secret that is shared between the mobile terminal and the other network entity that permits the mobile terminal to be authenticated. Typically, this shared secret is embodied in the form of a cryptographic key or username/password combination. In order to further enhance the security, many security algorithms require re-keying at various intervals or keys that are bound to a specific purpose. Re-keying is a process in which new keys are established such that future communications may be protected with the new keys. Purpose specific keys are bound, for example, to a specific service usage or network node. If a third party obtained one set of keys and therefore compromised the security between the mobile terminal and the other network entity, re-keying would prevent the third party from continuing to be able to access the communication with the mobile terminal once a new set of keys has been established, thereby limiting temporally the security breach. US2006036733 A1 relates to computer networks, especially dynamic host configuration, multicast security and network access authentication including interactions between a PANA Authentication Agent and a DHCP Dynamic Host Configuration Protocol server.

A Generic Bootstrapping Architecture (GBA) is a framework architecture that allows bootstrapping of a security key between a mobile terminal and the home network, which can then be used to further derive security keys for use between the mobile terminal and a network application server. The network application server or the network node using the shared secret with the mobile terminal can reside in any kind of network, e.g., visited network, open Internet, or it can even be another device. Recently, GBA has been thought of for use in combination with identity management systems such as, for example, the Liberty Alliance. Accordingly, Third Generation Partnership Project (3GPP) Generic Authentication Architecture (GAA), which may, for example, be based on mobile algorithms AKA (authentication and key agreement) for 3GPP or CHAP (challenge-handshake authentication protocol) and CAVE (cellular authentication and voice encryption) for 3GPP 2, may be employed to provide single sign on access to multiple services or websites after an initial sign on and authentication of the user. With the deployment of GBA, other protocols may also be used for bootstrapping such as, for example, protocols developed by CableLabs or the Open Mobile Alliance. The main difference between those variants lies in the actual method used to generate the shared secret. The deployment, usage and handling of the service specific shared secrets remain the same for all the above mentioned variants of GBA. This allows network operators with heterogeneous network infrastructures, e.g., if a network operator owns a fixed and a mobile network, to allow users to use the same service independent of how they want to access the service (e.g., via PC, phone etc). Additionally, for the operator, backend servers can be re-used to a large extent.

However, re-keying typically occurs at a periodicity that ranges into a couple of months. Additionally, once a key is shared between a bootstrapping server function (BSF) that allows the bootstrapping of a shared key, Ks, between a mobile terminal and the BSF, the Ks or the service specific derived keys Ks_(ext/int)_NAF cannot currently be canceled or "revoked". Once valid keys have been given out to the service provider, the service provider has no means to obtain information regarding whether the keys have been revoked. Thus, the Ks, which can then be used to derive a further application key, called Ks_NAF, Ks_ext_NAF or Ks_int_NAF, Ks_local (hereinafter this set of application keys may be referred to as Ks_(ext/int)_NAF) to be used between the mobile terminal and an application server in the network, e.g., a network application function (NAF) in GBA terminology, may be used even after the user switches her home operator, wishes to cancel the subscription or stops paying his or her bills. This is particularly critical, if the NAF is a running a service that is charged via the operator to the user. For example, in one situation the NAF authenticates the user based on the shared secret, the user consumes the service (merely needing IP connectivity) and then the NAF charges the operator for the service usage, but the operator may no longer have the business relationship with the user. Given that there is currently no mechanism by which to cancel the Ks_(ext/int)_NAFs that have been provided to the NAFs for various application server specific applications, the user may be able to use the service for up to a period of months after the service before the key expires. It should be noted, that the user can access the service via any means, i.e. the user does not need to use the access network the operator is providing. Hence, the user could use the service, even if the home operator would no longer grant the access to the network.

Accordingly, it may be desirable to provide a mechanism by which key management may be performed so that keys such as, for example, the Ks_(ext/int)_NAF may be canceled or revoked after issuance, but before expiration according to the normal key lifetime. After the expiry of the key lifetime, it is assumed that the liability of the home operator also expires.

### SUMMARY OF THE INVENTION

A method, apparatus and computer program code are therefore provided for enabling key management within a GBA framework in accordance with attached claims 1 and 11-13. Accordingly, a single sign on logout may be possible to a large range of service providers. In accordance with various embodiments of the present invention, the deletion or cancellation of existing keys may be initiated by a user or by an operator using messaging exchanged between the BSF and a NAF. Thus, for example, a user may request cancellation of one or more keys to effectively logout from the corresponding service or services. Additionally, an operator may cancel one or more keys associated with a user and a corresponding service or services. Therefore, for example, if a user or operator fears that the user's key is compromised, or if the user or operator desires to cancel a key associated with the user for other reasons e.g. due to lost phone, the corresponding key may be deleted.

In one exemplary embodiment, a method for providing key management for a mobile authentication architecture is provided. The method may include providing a key revocation message over an interface otherwise fetching the shared key information from a bootstrapping server function and a network application function. This interface and its various implementation formats are now used to transmit canceling key information associated with the key revocation message. The interface may be DIAMETER based or web service based.

In another exemplary embodiment, a computer program product for providing key management for a mobile authentication architecture is provided. The computer program product includes at least one computer-readable storage medium having computer-readable program code portions stored therein. The computer-readable program code portions include first and second executable portions. The first executable portion is for providing a key revocation message over an interface otherwise defined for sharing key acquisition information between a bootstrapping server function. The second executable portion is for canceling key information associated with the key revocation message.

In another exemplary embodiment, an apparatus for providing key management for a mobile authentication architecture may include a processor. The processor may be configured to provide a key revocation message over an interface otherwise defined for sharing key acquisition information between a bootstrapping server function and a network application function, and cancel key information associated with the key revocation message.

In another exemplary embodiment, a method for providing key management for a mobile authentication architecture is provided. The apparatus includes receiving a key revocation message over an interface otherwise defined for sharing key acquisition information between a bootstrapping server function, and canceling key information associated with the key revocation message.

Embodiments of the present invention may provide a method, apparatus and computer program product for key management such as by enabling cancellation of keys prior to key expiration. As a result, users and/or operators may be enabled to initiate the deletion or cancellation of one or more authentication keys associated with a particular user. Thus, improved security may be provided in the context of a GBA environment, such as a GBA framework used in combination with an identity management system.

### BRIEF DESCRIPTION OF THE DRAWINGS

Having thus described embodiments of the invention in general terms, reference will now be made to the accompanying drawings, which are not necessarily drawn to scale, and wherein:
FIG. 1 is a schematic block diagram of a mobile terminal according to an exemplary embodiment of the present invention;
FIG. 2 is a schematic block diagram of a network model according to an exemplary embodiment of the present invention;
FIG. 3 is a schematic block diagram of a GAA architecture combined with an identity management system architecture in which the NAF and identity provider are collocated according to an exemplary embodiment of the present invention;
FIG. 4 is a schematic block diagram of a GAA architecture combined with an identity management system architecture in which the BSF and identity provider are collocated according to an exemplary embodiment of the present invention;
FIG. 5 is a block diagram according to an exemplary method for providing key management according to an exemplary embodiment of the present invention; and
FIG. 6 is a block diagram according to another exemplary method for providing key management according to an exemplary embodiment of the present invention.

### DETAILED DESCRIPTION OF THE INVENTION

Embodiments of the present inventions now will be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like reference numerals refer to like elements throughout.

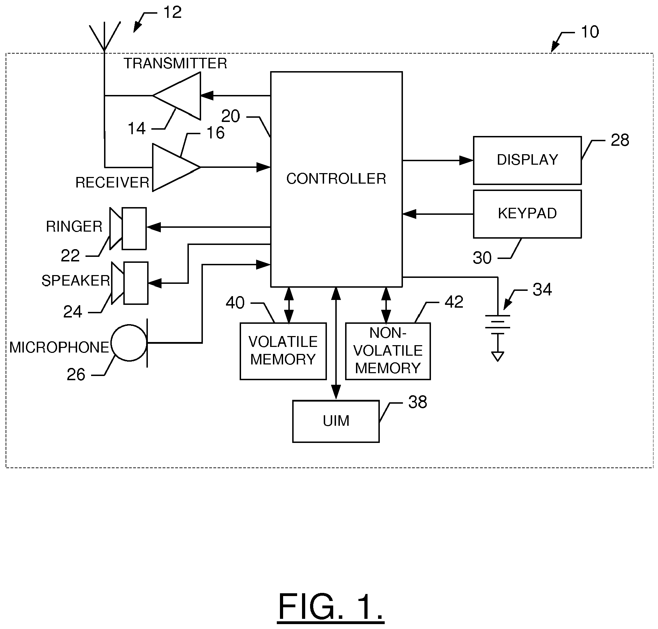

FIG. 1, one aspect of the invention, illustrates a block diagram of a mobile terminal 10 that would benefit from embodiments of the present invention. It should be understood, however, that a mobile telephone as illustrated and hereinafter described is merely illustrative of one type of mobile terminal that would benefit from embodiments of the present invention and, therefore, should not be taken to limit the scope of embodiments of the present invention. While several embodiments of the mobile terminal 10 are illustrated and will be hereinafter described for purposes of example, other types of mobile terminals, such as portable digital assistants (PDAs), pagers, mobile televisions, gaming devices, laptop computers, cameras, video recorders, audio/video player, radio, GPS devices, or any combination of the aforementioned, and other types of voice and text communications systems, can readily employ embodiments of the present invention. Also, the keys mentioned herein may be stored on an integrated circuit entity e.g. smart card, or one or more keys may be transferred for service consumption to a third device e.g. PC.

In addition, while several embodiments of the method of the present invention are performed or used by a mobile terminal 10, the method may be employed by other than a mobile terminal. Moreover, the system and method of embodiments of the present invention will be primarily described in conjunction with mobile communications applications. It should be understood, however, that the system and method of embodiments of the present invention can be utilized in conjunction with a variety of other applications, both in the mobile communications industries and outside of the mobile communications industries.

The mobile terminal 10 includes an antenna 12 (or multiple antennae) in operable communication with a transmitter 14 and a receiver 16. The mobile terminal 10 may further include an apparatus, such as a controller 20 or other processing element, that provides signals to and receives signals from the transmitter 14 and receiver 16, respectively. The signals include signaling information in accordance with the air interface standard of the applicable cellular system, and also user speech, received data and/or user generated data. In this regard, the mobile terminal 10 is capable of operating with one or more air interface standards, communication protocols, modulation types, and access types. By way of illustration, the mobile terminal 10 is capable of operating in accordance with any of a number of first, second, third and/or fourth-generation communication protocols or the like. For example, the mobile terminal 10 may be capable of operating in accordance with second-generation (2G) wireless communication protocols IS-136 (time division multiple access (TDMA)), GSM (global system for mobile communication), and IS-95 (code division multiple access (CDMA)), or with third-generation (3G) wireless communication protocols, such as Universal Mobile Telecommunications System (UMTS), CDMA2000, wideband CDMA (WCDMA) and time division-synchronous CDMA (TD-SCDMA), with fourth-generation (4G) wireless communication protocols or the like. As an alternative (or additionally), the mobile terminal 10 may be capable of operating in accordance with non-cellular communication mechanisms. For example, the mobile terminal 10 may be capable of communication in a wireless local area network (WLAN) or other communication networks. Embodiments of the invention could also be utilized by a PC, that has an operator smart card (e.g. UIM, or SIM, or USIM) attached, then no antenna would be needed, but another communication apparatus is assumed to be present (e.g. fixed line).

It is understood that the apparatus, such as the controller 20, may include circuitry desirable for implementing audio and logic functions of the mobile terminal 10. For example, the controller 20 may be comprised of a digital signal processor device, a microprocessor device, and various analog to digital converters, digital to analog converters, and other support circuits. Control and signal processing functions of the mobile terminal 10 are allocated between these devices according to their respective capabilities. The controller 20 thus may also include the functionality to convolutionally encode and interleave message and data prior to modulation and transmission. The controller 20 can additionally include an internal voice coder, and may include an internal data modem. Further, the controller 20 may include functionality to operate one or more software programs, which may be stored in memory. For example, the controller 20 may be capable of operating a connectivity program, such as a conventional Web browser. The connectivity program may then allow the mobile terminal 10 to transmit and receive Web content, such as location-based content and/or other web page content, according to a Wireless Application Protocol (WAP), Hypertext Transfer Protocol (HTTP) and/or the like, for example. Additionally, the connectivity program may allow unidirectional information to be processed e.g. broadcast reception for Mobile TV.

The mobile terminal 10 may also comprise a user interface including an output device such as a conventional earphone or speaker 24, a ringer 22, a microphone 26, a display 28, and a user input interface, all of which are coupled to the controller 20. The user input interface, which allows the mobile terminal 10 to receive data, may include any of a number of devices allowing the mobile terminal 10 to receive data, such as a keypad 30, a touch display (not shown) or other input device. In embodiments including the keypad 30, the keypad 30 may include the conventional numeric (0-9) and related keys (#, *), and other hard and soft keys used for operating the mobile terminal 10. Alternatively, the keypad 30 may include a conventional QWERTY keypad arrangement. The keypad 30 may also include various soft keys with associated functions. In addition, or alternatively, the mobile terminal 10 may include an interface device such as a joystick or other user input interface e.g. via cable to PC. The mobile terminal 10 further includes a battery 34, such as a vibrating battery pack, for powering various circuits that are required to operate the mobile terminal 10, as well as optionally providing mechanical vibration as a detectable output.

The mobile terminal 10 may further include a user identity module (UIM) 38. The UIM 38 is typically a memory device having a processor built in. The UIM 38 may include, for example, a subscriber identity module (SIM), a universal integrated circuit card (UICC), a universal subscriber identity module (USIM), a removable user identity module (R-UIM), etc. The UIM 38 typically stores information elements related to a mobile subscriber. In addition to the UIM 38, the mobile terminal 10 may be equipped with memory. For example, the mobile terminal 10 may include volatile memory 40, such as volatile Random Access Memory (RAM) including a cache area for the temporary storage of data. The mobile terminal 10 may also include other non-volatile memory 42, which can be embedded and/or may be removable. The non-volatile memory 42 can additionally or alternatively comprise an electrically erasable programmable read only memory (EEPROM), flash memory or the like, such as that available from the SanDisk Corporation of Sunnyvale, California, or Lexar Media Inc. of Fremont, California. The memories can store any of a number of pieces of information, and data, used by the mobile terminal 10 to implement the functions of the mobile terminal 10. For example, the memories can include an identifier, such as an international mobile equipment identification (IMEI) code, capable of uniquely identifying the mobile terminal 10. Furthermore, the memories may store instructions for determining cell id information. Specifically, the memories may store an application program for execution by the controller 20, which determines an identity of the current cell, i.e., cell id identity or cell id information, with which the mobile terminal 10 is in communication. The UIM may be realized in hard or software. The user identity may also compromise of another identifier e.g. line identifier.

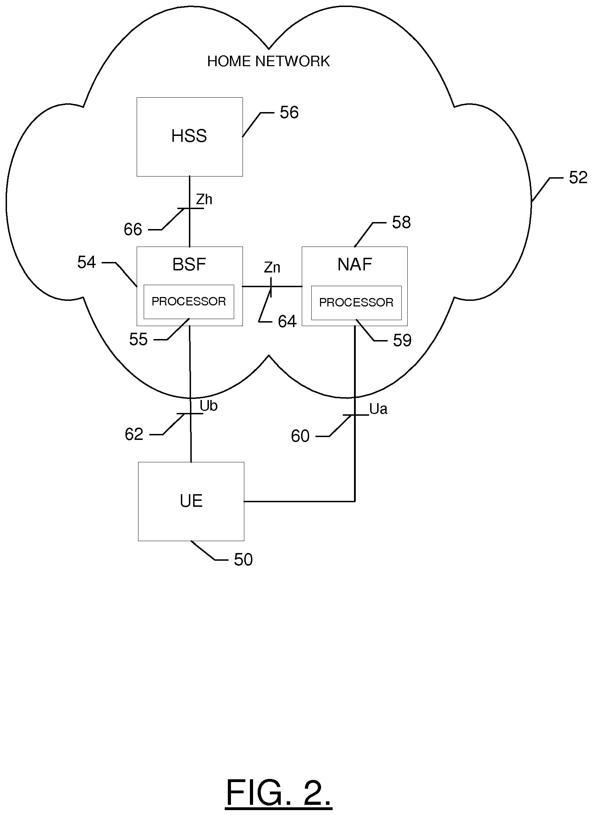

FIG. 2 illustrates a block diagram of a simple network model that may benefit from embodiments of the present invention. As shown, a user equipment (UE) 50 (an example of which may include the mobile terminal 10 of FIG. 1) is shown to be in communication with a home network 52, such as a cellular network. While a mobile telephone is a common example of a mobile terminal, a mobile telephone is merely illustrative of one type of mobile terminal that would benefit from embodiments of the present invention and, therefore, should not be taken to limit the scope of the present invention. Moreover, although embodiments of the present invention will be primarily described in conjunction with mobile communications applications, other embodiments of the present invention can be utilized in conjunction with a variety of other applications like web site access, TV, news services, auction services, both in the mobile communications industries and outside of the mobile communications industries.

Although not shown in FIG. 2, in the embodiment in which the home network 52 is a cellular network, the UE 50 generally includes an antenna for transmitting signals to and for receiving signals from one or more base transceiver stations (BTS's) (also termed base stations or eNodeB for newer networks, or a WLAN access point). The BTS is a part of one or more cellular or mobile networks that each includes elements required to operate the network. A BTS acts as the interface between a network and a mobile node, in that the BTS converts digital data into radio signals and converts radio signals into digital data. Each BTS generally has an associated radio tower or antenna and communicates with various access terminals using radio links. In particular, BTSs communicate with various access terminals through the modulation and transmission of sets of forward signals, while BTSs receive and demodulate sets of reverse signals from various access terminals that are engaged in a wireless network activity (e.g., a telephone call, Web browsing session, etc.).

BTSs generally connect to one or more base station controllers (BSCs) (e.g., using un-channelized T1 facilities or direct cables, although this is not required). The connection between a BTS and a BSC may use, for example, un-channelized T1 facilities or direct cables. BSCs are used to interface (aggregate) all radio frequency (RF) traffic arriving from the antennas of the BTSs, and to provide this traffic to a mobile switching center (MSC). As known in the art, BSCs are generally responsible for managing the radio resources for one or more BTSs. For example, BSCs may handle radio-channel setup, frequency hopping, and handovers. Moreover, the MSC is responsible for providing the interface between the radio access network (RAN), which includes BTSs, BSCs, and packet control functions (PCFs), and a public switched telephone network (PSTN). In particular, an MSC may control the signaling required to establish calls, and allocates RF resources to BSCs and PCFs. In operation, the MSC is capable of routing calls, data or the like to and from mobile stations when those mobile stations are making and receiving calls, data or the like. The MSC can also provide a connection to landline trunks when mobile stations are involved in a call.

PCFs are used to route IP packet data between mobile terminals (when within range of one of BTSs) and a packet data service node (PDSN). A PDSN, in turn, may be used to provide access to one or more IP networks, such as, for example, the Internet, intranets, applications servers, or corporate virtual private networks (VPNs). In this manner, a PDSN acts as an access gateway. The network may or may not utilize Network Address Translation.

Although not every element of every possible network is shown and described herein, it should be appreciated that the UE 50 may be coupled to one or more of any of a number of different networks using one or more of any of a number of different modes (also referred to herein as protocols). In this regard, the network can be capable of supporting communication in accordance with any one or more of a number of first-generation (1G), second-generation (2G), 2.5G, third-generation (3G), 3.9G, fourth-generation (4G) mobile communication protocols or the like. More particularly, the mobile terminal may be coupled to a network capable of supporting communication in accordance with 2G wireless communication protocols IS-136 (TDMA), GSM, and IS-95 (CDMA). Also, for example, the network can be capable of supporting communication in accordance with 2.5G wireless communication protocols GPRS, Enhanced Data GSM Environment (EDGE), or the like. In addition, for example, one or more of the network(s) can be capable of supporting communication in accordance with 3G wireless communication protocols such as CDMA2000 and Universal Mobile Telephone System (UMTS) network employing Wideband Code Division Multiple Access (WCDMA) radio access technology. Additionally, the network may be capable of supporting wide area network (WAN) communications, such as WLAN (IEEE 802.11) or WiMAX (802.16) or fixed line access. Some narrow-band AMPS (NAMPS), as well as TACS, network(s) may also benefit from embodiments of the invention, as should dual or higher mode mobile stations (e.g., digital/analog or TDMA/CDMA/analog phones).

Reference is again made to FIG. 2, which illustrates a network model according to, for example, a basic GBA framework in which the home network 52 includes a bootstrap server function (BSF) 54, a home subscriber system (HSS) 56, and a network application function (NAF) 58. Of note, other NAFs may exist either in the home network or in foreign networks. Although not shown, the home network 52 may further include a home location register (HLR) or an authentication, authorization and accounting (AAA) server. AAA, HLR, HSS are databases which contain cryptographic information for access authorization and user identity information. Accordingly, wherever the term HSS is used hereinafter, the term should be seen as an example and replaceable by HLR or AAA. The BSF 54 may be a server located in the home network 52 of a mobile terminal (e.g., the UE 50), as indicated in FIG. 2, which is configured to allow the bootstrapping of a shared key, Ks, between the UE 50 and the BSF 54. The NAF 58 may be an application specific server within the home network 52 (or other networks) which, using a derived application key, called Ks_(ext/int)_NAF, may be used between the UE 50 and the NAF 58. Ks_(ext/int)_NAF is application server specific, i.e., each application server will have a different application key Ks_(ext/int)_NAF derived from the Ks, thus ensuring that different application servers do not share the same application key. Of note, although the terms BSF and NAF used herein are typically associated with a GBA framework, such terms should be constructed to be applicable to devices having corresponding functions that may be outside the GBA framework as well. The BSF may serve a large range of network types and not be necessarily bound to one network type. The BSF may also be integrated part of a subscriber database, like HSS.

In an exemplary embodiment, the HSS 56 may include a complete set of a user's GBA user security settings (GUSS). The GUSS may also be stored externally next to the BSF. The HLR may include subscriber information used in handing over calls to networks other than the home network 52 and the AAA server may dictate the computer resources that users have access to and keep track of user activity over a network. It should be noted, however, that alternative exemplary embodiments of a network model may not include one or more of the above described components and/or may include additional components. In 3GPP2, for example, GBA bootstrapping may be based on a long term shared secret stored in the HSS 56 (in which case, AKA (Authentication and Key Agreement) may be used), or the HLR (in which case CAVE may be used), or the AAA server (in which case Mobile IP authentication may be used). In 3GPP, GBA bootstrapping is based on long term shared secret stored in the HSS 56 (and AKA is used).

In an exemplary embodiment, the NAF 58 and the BSF 54 may each include corresponding processors 59 and 55, respectively. The processors 59 and 55 may be local processing elements associated with the NAF 58 and the BSF 54, respectively, that may be configured to, for example, execute instructions stored in a memory located at or accessible to the respective processors 59 and 55 for the performance of corresponding functions as defined herein. A processing element such as those described herein may be embodied in many ways. For example, the processing element may be embodied as a processor, a coprocessor, a controller or various other processing means or devices including integrated circuits such as, for example, an ASIC (application specific integrated circuit). As such, although each of the NAF 58 and the BSF 54 may be any means or device embodied in hardware, software or a combination of hardware and software that is configured to perform the respective functions of the NAF 58 and the BSF 54, the processors 59 and 55 may alternatively control or otherwise be embodied as the NAF 58 and the BSF 55, respectively.

In the network model of FIG. 2, communication between various elements is established via interfaces. For example, the UE 50 may communicate with the NAF 58 via a first interface (Ua) 60 (e.g., via IP, HTTP digest). The UE 50 may communicate with the BSF 54 via a second interface (Ub) 62 (e.g., via AKA). The BSF 54 may communicate with the NAF 58 via a third interface (Zn) 64 (e.g., via DIAMETER or web service protocol). The BSF 54 may communicate with the HSS 56 (and/or the HLR and AAA server, if applicable) via a fourth interface (Zh) 66 (e.g., via the DIAMETER, RADIUS or Message Application Protocol (MAP) protocol). Thus, for example, in order to commence a bootstrap procedure, the UE 50 submits a bootstrap request to the BSF 54 via the Ub interface 62. Upon receipt of the bootstrap request, the BSF 54 and the UE 50 continue with the bootstrapping procedure over the Ub interface 62, which comprises a message exchange which may involve two or more roundtrips between the UE 50 and the BSF 54, and involves mutual authentication between the UE 50 and the home network 52. The bootstrapping procedure results in the shared secret Ks (with an associated Bootstrapping Transaction ID (B-TID) and a lifetime) at both the UE 50 and BSF 54. Subsequently, when the UE 50 attempts to communicate with the NAF 58 via the Ua interface 60, the UE 50 can derive the specific Ks_(ext/int)_NAF (e.g., one or several application specific key(s)) from the Ks (using a predefined Key Derivation function (KDF), based on information including an identity of the NAF 58). The UE 50 conveys the B-TID to the NAF 58, which will then contact the BSF 54 via the Zn interface 64. The BSF 54 then contacts the HSS to obtain over Zh or Zh' interface the needed data to derive the Ks and optionally also further security related information e.g., GBA User Security Settings (GUSS). Then the BSF derives the Ks_(ext/int)_NAF the same way as the UE 50, and returns the Ks_(ext/int)_NAF back to the NAF 58 (the key lifetime and the User Security Settings (USS) which may be part of the GUSS may also be provided along with the key(s)). Subsequent communications conducted by the application executed by the UE 50 and the NAF 58 can then be secured via the new Ks_(ext/int)_NAF or further keys derived from those.

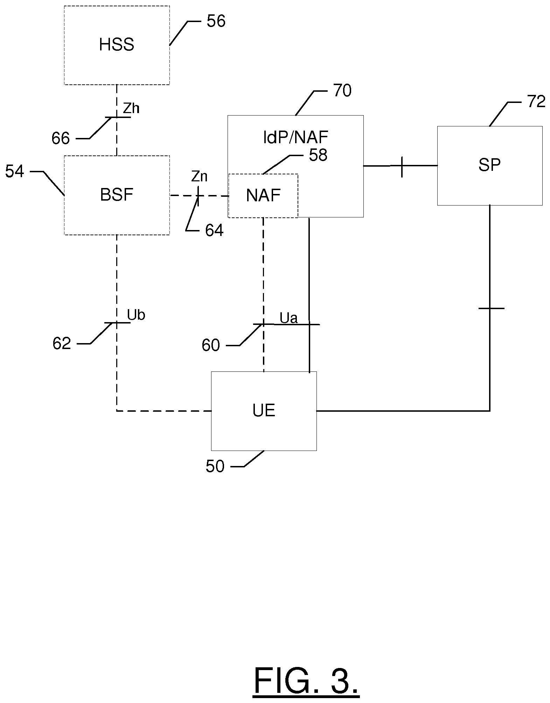

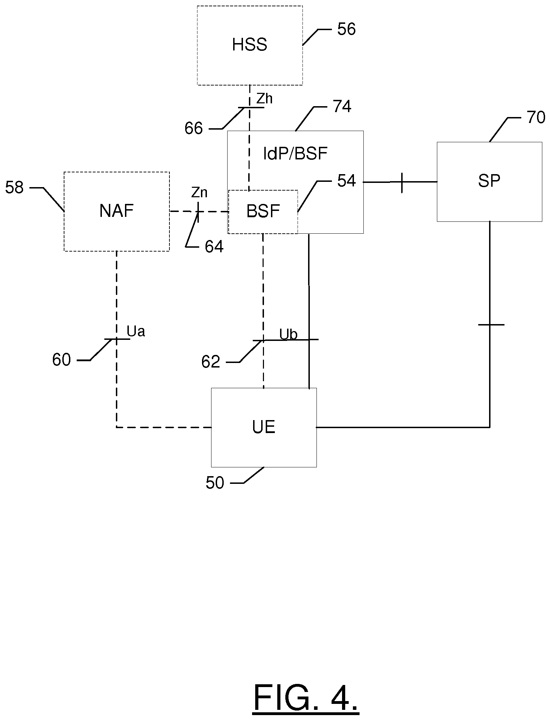

Currently, communication via the Zn interface 64 is limited to exchanging information for acquiring keys, USS and corresponding key lifetimes. It should be noted that the Zn interface may utilize a Zn-proxy in some cases and then is called Zn' interface. However, embodiments of the present invention may further provide for the exchange of information over the Zn interface 64 related to key cancellation or deletion. Thus, for example, a user or operator may initiate key deletion in order to "revoke" an issued key prior to the expiration of the key. Furthermore, as will be seen below, the information that is enabled to be exchanged over the Zn interface 64 in accordance with embodiments of the present invention may provide for the user and/or operator to revoke issued keys in embodiments in which a GBA framework is combined with an identity management system. Two specific exemplary embodiments of the present invention will now be described in reference to FIGS. 3 and 4 to illustrate variations of the combination of a GAA architecture of a GBA framework with an identity management system, where either the NAF is collocated with the Identity Provider role or the BSF is collocated with the Identity Provider role. However, it should be understood that the embodiments of FIGS. 3 and 4 are provided by way of example and not of limitation. For example, the Identity Provider may also be realized as a web service and provides a single sign on service. Accordingly, other architectures could also employ embodiments of the present invention. It should also be noted that, in the embodiments illustrated in FIGS. 3 and 4, elements illustrated in dotted lines and reference points illustrated along dotted lines are 3GPP reference points defined in TS 33.220, TS 29.109 and TS 24.109 and elements illustrated in solid lines and reference points illustrated along solid lines are identity management system components for example used by the Liberty Alliance Project.

FIG. 3 illustrates a schematic block diagram of a GAA architecture combined with an identity management system architecture in which the NAF and identity provider (IdP) are collocated according to an exemplary embodiment of the present invention. In this regard, an IdP may be an entity that is enabled for communication within an identity management system (e.g., LAP (Liberty Alliance Project)) in order to manage identity information and provide assertions of authentication to service providers (SPs). As such, NAFs, of which the NAF 58 is an example, may provide particular single sign on services that require authentication in order to access the corresponding particular services. As such, some form of log in for authentication purposes is typically required to access the NAF 58. For example, the NAF 58 could be associated with a mobile television service or a news service. Accordingly, as provided in the example of FIG. 3, the NAF 58 may be collocated with an IdP on an identity management system in an IdP/NAF 70, which may be any means or device embodied in hardware, software or a combination of hardware and software that is configured to perform the corresponding functions of the IdP and NAF as described above. Thus, communication between the UE 50 and the IdP/NAF 70 may trigger authentication of the UE 50 and enable successful authentication information transfer from the IdP/NAF 70 to SPs such as, for example, SP 72, which may be any means or device embodied in hardware, software or a combination of hardware and software that is configured to provide services to the UE 50 based on confirmation of the identity of the UE 50 via the IdP/NAF 70. In an exemplary embodiment, the SP 72 may correspond to a web site offering goods and/or service and may communicate with other entities via, for example, HTTP.

In an exemplary embodiment, the processor 59 of the NAF 58 may also serve as a processing element of the IdP/NAF 70. Alternatively, the processor 59 may be in communication with a separate processing element of the IdP/NAF 70.

Accordingly, embodiments of the present invention may enable a user of the UE 50 to access multiple applications and services based on a single sign on (SSO). As such, when the user possesses a valid shared key (Ks), the Ks may be used as described above to define application specific Ks_(ext/int)_NAFs to enable the user to access different NAFs for the receipt of services related to the corresponding specific application(s). Meanwhile, the UE 50 can also access various different SPs based on identity information associated with the user of the UE 50, in which the identity information can also be provided based on the initial authentication of the user. Moreover, if the user or a network operator desires to cancel, revoke or delete one or more keys generated with the Ks (or delete the Ks itself at the UE or BSF), embodiments of the present invention enable such functionality by virtue of an expansion of the communication capabilities with respect to information transferred via the Zn interface 64. In this regard, as will be discussed in greater detail below, the Zn interface 64 according to embodiments of the present invention is enabled to communicate information related to key revocation. Accordingly, even after a valid Ks is issued and/or other valid Ks_(ext/int)_NAFs have been issued, the issued Ks or Ks_(ext/int)_NAFs may be revoked prior to expiration thereof. Thus, embodiments of the present invention may enable a SSO logout. More specifically, an embodiment in accordance with the architecture of FIG. 3 may provide that the user can initiate the SSO logout via communication with the NAF 58.

In this regard, for example, if the user desires to perform the SSO logout, the UE 50 may contact one of the web service providers (WSPs), which may be an entity (e.g., the SP 74) acting in a role to provide a web service, that is affiliated with the IdP. The user may provide a SSO logout request, which may then be redirected to the IdP/NAF 70 (or a corresponding authentication service when a web service framework is used). The user's desire to perform the SSO logout may be associated with a particular key (e.g., one or several Ks_(ext/int)_NAF associated with a particular application) that may be identified in the SSO logout request. As such, the user may request deletion of a single key (e.g., the single Ks_(ext/int)_NAF) or a plurality of keys related to the Ks. The IdP/NAF 70 may then delete the particular key identified (e.g., the processor 59 may delete the corresponding key information (such as the key and the key lifetime) and trigger the BSF 54 to do the same. In this regard, for example, the IdP/NAF 70 (e.g., via the processor 59) may be configured to communicate a key deletion message via the Zn interface 64 to the BSF 54 to indicate the identity of the key(s) to be deleted at the BSF 54 (e.g. the Ks and potentially also all or some keys related to this Ks). The BSF 54 may then delete the related key information (e.g., via the processor 55).

In an exemplary embodiment, the BSF 54 may be further configured to communicate key deletion messages to NAFs other than the NAF 58, which may have initiated the key deletion message in the first place. Accordingly, other keys and identities at other NAFs may also be deleted in response to the initial user SSO logout request. It should be noted that rather than an SSO logout request, the user may simply request revocation of a specific key in similar fashion to that described above. Accordingly, in some embodiments, either the Ks may be deleted or only specifically identified Ks_(ext/int)_NAFs may be deleted (e.g., as identified by the key identifier B-TID). In one embodiment, for an SSO logout, only the Ks may be deleted in the BSF, but for a specific key revocation request, corresponding specifically identified keys may be deleted. Thus, the BSF 54 may be configured to keep track of which NAFs have received a key and whether the received key is valid. For example, the BSF 54 may store or access stored information recording key information and which NAFs have each corresponding key. Accordingly, if a key is to be deleted (e.g., as indicated by a SSO logout request, a key revocation request, a session cancellation message, etc.), a NAF having the corresponding key to be deleted may receive a key deletion message from the BSF 54 and may terminate a current session (if applicable) and delete all GBA keys associated with the particular subscriber (e.g., identified by the B-TID). As such, the BSF 54 may be configured to operate as a "client" in regard to key cancellation functions under certain circumstances.

FIG. 4 is a schematic block diagram of a GAA architecture combined with an identity management system architecture in which the BSF and IdP are collocated according to an exemplary embodiment of the present invention. In this regard, for example, the BSF 54 may be collocated with an IdP on an identity management system in an IdP/BSF 74, which may be any means or device embodied in hardware, software or a combination of hardware and software that is configured to perform the corresponding functions of the IdP and BSF as described above, may be enabled to authenticate a user of the UE 50 by executing a bootstrapping authentication procedure via the Ub interface 62 as described above. As such, a reference point between the UE 50 and the IdP/BSF 74 along the Ub interface 62 not only enables communication of information for executing the bootstrapping procedure, but also enables communication of identity management system (e.g., LAP/SAML (Security Assertion Markup Language) related information.

In an exemplary embodiment, the processor 55 of the BSF 54 may also serve as a processing element of the IdP/BSF 74. Alternatively, the processor 55 may be in communication with a separate processing element of the IdP/BSF 74.

Similar to the description above in reference to FIG. 3, the embodiment of FIG. 4 may enable a SSO logout or key revocation request from a user. More specifically, an embodiment in accordance with the architecture of FIG. 4 may provide that the user can initiate the SSO logout or key revocation request via communication with the BSF 54. Deletion of the key or keys that are identified for deletion may occur in similar fashion to that described above in reference to FIG. 3. However, rather than receiving a key deletion message from the NAF 58 and relaying key deletion messages to other NAFs that also have the key to be deleted, the BSF 54 may receive the SSO logout or key revocation request directly from the user and thus may communicate key deletion messages to all NAFs that have the key to be deleted via the Zn interface 64.

In various exemplary embodiments, the user may communicate the SSO logout or key revocation request to the BSF 54 for reasons such as, for example, concern over whether the Ks has been compromised or concern over whether the service/identity provider is not behaving correctly. As such, the UE 50 may communicate the SSO logout or key revocation request in the form of a bootstrapping cancellation message over the Ub interface 62. User identity may be checked, for example, by running an AKA procedure and the BSF 54 may check, for example, an internal database, in order to identify all NAFs that have queried the user's GBA credentials. The BSF 54 may then communicate a cancellation message (e.g., the key deletion message) to all active NAFs (or NAFs that have the key to be deleted) and delete the corresponding key information and user dynamic session data from the internal database of the BSF 54.

The description above with regard to FIGS. 3 and 4 provides for user initiated SSO logout or key revocation. However, embodiments of the present invention may further provide for key revocation initiated from an operator (e.g., an operator associated with the BSF 54). In this regard, for example, if the operator desires to cancel session data (or even the whole identity) associated with a particular user, the operator may provide a key revocation message to the BSF 54. Some examples of reasons why the operator may wish to revoke keys may include that the user has performed fraud at a particular SP, the user has left the operator and the operator is no longer willing to manage the user identity, the user is not paying bills, the user has lost his or her phone, the phone was stolen, or numerous other reasons.

In response to receipt of the key revocation message, the BSF 54 may initiate key revocation by deleting corresponding data entries including corresponding key information. In an exemplary embodiment, the HSS 56 could initially have an account deleted, which may trigger the BSF 54 to initiate key revocation for keys corresponding to the deleted account. For the key revocation, the BSF 54 may act as a web service consumer (e.g., if a web service based Zn interface 64 is used). In some embodiments, key deletion messages subsequently issued from the BSF 54 over the Zn interface 64 to various NAFs may be sent by the DIAMETER protocol via a corresponding new message type for the key deletion messages (since, as stated above, the Zn interface previously only handled key acquisition related messaging). The NAFs (e.g., the IdP/NAF 70 of FIG. 3) receiving the key deletion messages may act as a WSP and process the messages (e.g., by deleting related data such as keys, key lifetimes, user name, security settings associated with the user, etc.). In this regard, if the IdP/NAF 70 was previously offering an authentication service, the IdP/NAF 70 may, in response to the receipt of the key deletion message, offer a key deletion service by deleting corresponding key related information at the IdP/NAF 70. A confirmation message may then be sent to the BSF 54 from the IdP/NAF 70. The BSF 54 may also send further confirmation to the HSS 56 (or HLR/AAA) if applicable (e.g., if an account deletion at the HSS 56 initiated the key revocation).

In an exemplary embodiment, rather than having the BSF 54 operate as a "client", the NAF 58 may be configured to poll periodically to determine whether a particular B-TID previously acquired by the NAF 58 has been invalidated (e.g., was the subject of a key revocation or SSO logout request). Accordingly the NAF 58 would query the BSF 54 in relation to key revocation and the BSF 54 would continue to maintain a server rather than client role. Implementation of this embodiment may be performed in accordance with also providing a polling period defining a delay time between which queries may be made by the NAF 58 with regard to key invalidation.

According to one exemplary aspect of embodiments of the invention, the functions performed by one or more of the entities of the system, such as the BSF 54, the NAF 58, the UE 50 or any of the other elements, may be performed by various means, such as hardware and/or firmware, including those described above, alone and/or under control of a computer program product. The computer program product for performing one or more functions of exemplary embodiments of the invention includes a computer-readable storage medium, such as the non-volatile storage medium, and software including computer-readable program code portions, such as a series of computer instructions, embodied in the computer-readable storage medium.

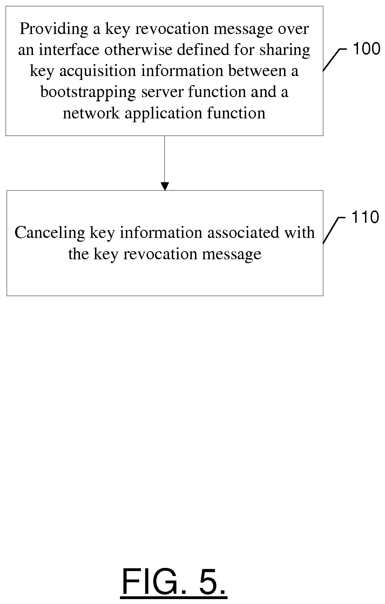

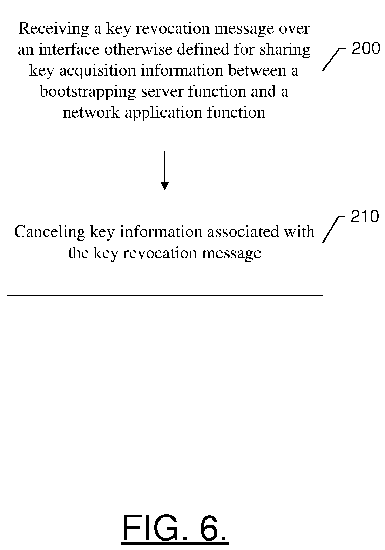

In this regard, FIGS. 5 and 6 are flowcharts of a method and program product according to exemplary embodiments of the invention. It will be understood that each block or step of the flowcharts, and combinations of blocks in the flowcharts, can be implemented by various means, such as hardware, firmware, and/or software including one or more computer program instructions. As will be appreciated, any such computer program instructions may be loaded onto a computer or other programmable apparatus (i.e., hardware) to produce a machine, such that the instructions which execute on the computer or other programmable apparatus create means for implementing the functions specified in the flowcharts block(s) or step(s). These computer program instructions may also be stored in a computer-readable memory that can direct a computer or other programmable apparatus to function in a particular manner, such that the instructions stored in the computer-readable memory produce an article of manufacture including instruction means which implement the function specified in the flowcharts block(s) or step(s). The computer program instructions may also be loaded onto a computer or other programmable apparatus to cause a series of operational steps to be performed on the computer or other programmable apparatus to produce a computer-implemented process such that the instructions which execute on the computer or other programmable apparatus provide steps for implementing the functions specified in the flowcharts block(s) or step(s).

Accordingly, blocks or steps of the flowcharts support combinations of means for performing the specified functions, combinations of steps for performing the specified functions and program instruction means for performing the specified functions. It will also be understood that one or more blocks or steps of the flowcharts, and combinations of blocks or steps in the flowcharts, can be implemented by special purpose hardware-based computer systems which perform the specified functions or steps, or combinations of special purpose hardware and computer instructions.

As shown in FIG. 5, an exemplary method for providing key management in a mobile authentication architecture may include providing a key revocation message over an interface otherwise defined for sharing key acquisition information between a BSF and a NAF at operation 100. In one embodiment, the key revocation message may be a request for key revocation provided by the NAF to the BSF responsive to a user request initially received at the NAF. The BSF may then provide key deletion messages identifying a key to be revoked to other NAFs that are different from the NAF that received the request. In one embodiment, the BSF may determine which other NAFs are associated with a service using the key to be revoked. The NAF may communicate the key revocation message to the BSF in response to receipt of a user initiated request indicative of a key to be revoked. The NAF may be associated with a service using the key to be revoked.

As an alternative, the key revocation message may be provided by the BSF in response to a request for key revocation provided to the BSF from a user, or HSS, or another NAF or in response to an indication that the user's account has been closed. In one embodiment, the user's request may have been redirected from a service provider associated with a service from which a user communicating the request wishes to logout. In such an instance, the service may be accessible through a single sign on procedure and deleting (or rendering unusable) the key information may provide a single sign on logout function by deleting keys associated with the user at both the bootstrapping server function and the network application function.

The method may further include canceling key information associated with the key revocation message at operation 110. In many cases, canceling the key information may include rendering the key information inoperable, e.g., by deleting the key information. However, the key information could, in some instances, be retained in memory despite being marked, for example, as unusable or for deletion. In an exemplary embodiment, providing the key revocation message may include providing a request to revoke all keys associated with a shared secret generated pursuant to a generic bootstrapping architecture framework or providing a request to revoke an application specific key associated with the shared secret. In exemplary embodiments, FIG. 5 may correlate to communications initiated over the Zn interface at the NAF (e.g., when the NAF informs the BSF of a user request for key revocation) or communications initiated over the Zn interface by the BSF (e.g., when the BSF communicates key cancellation messages to one or more NAFs).

As shown in FIG. 6, an exemplary method for providing key management in a mobile authentication architecture may include receiving a key revocation message over an interface otherwise defined for sharing key acquisition information between a BSF and a NAF at operation 200 and canceling key information associated with the key revocation message at operation 210. In exemplary embodiments, FIG. 6 may correlate to communications received over the Zn interface at the NAF (e.g., when the BSF communicates key cancellation messages to one or more NAFs) or communications received over the Zn interface by the BSF (e.g., when the NAF informs the BSF of a user request for key revocation).

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for single sign on logging-out for use in a generic bootstrapping architecture (GBA) comprising:
providing (100) a key revocation message over an interface (64) otherwise defined for sharing key acquisition information between a bootstrapping server function and a network application function, one of the functions having collocated with it an identity provider (70, 74), the identity provider being enabled for communication within an identity management system in order to manage identity information and provide assertions of authentication to service providers; and
cancelling (110), at at least one of the bootstrapping server function (54) and the network application function (58) providing the key revocation message, key information associated with the key revocation message.

2. The method of claim 1, wherein providing the key revocation message comprises communicating a key cancellation message from the bootstrapping server function (54) in response to a user initiated request.

3. The method of claim 2, wherein providing the key revocation message comprises communicating the key cancellation message to at least one different network application function in response to an indication of a user request for cancellation of an identified key received from the network application function (58) and cancellation of the key information at the bootstrapping server function (54).

4. The method of claim 3, further comprising determining the at least one different network application function to be a network application function having the identified key prior to communicating the key cancellation message.

5. The method of claim 1, wherein providing the key revocation message comprises communicating the key revocation message from the network application function (58) in response to receipt of a user initiated request indicative of a key to be revoked, the network application function being associated with the service using the key to be revoked.

6. The method of any of claims 1 to 5, wherein providing the key revocation message comprises providing the key revocation message in response to an operator initiated request indicative of a key to be revoked.

7. The method of any of claims 1 to 6, wherein providing the key revocation message comprises communicating a key cancellation message in response to an indication of an account cancellation, the bootstrapping server function (54) being associated with a home network of the user associated with the cancelled account.

8. The method of any of claims 1 to 7, wherein providing the key revocation message comprises providing a request to revoke all keys associated with a shared secret generated pursuant to a generic bootstrapping architecture framework or providing a request to revoke an application specific key associated with the shared secret.

9. The method of any of claims 1 to 8, wherein providing the key revocation message comprises communicating a key cancellation message in response to receiving a request redirected from a service provider associated with the service from which the user communicating the request wishes to logout, in which the service is accessible through a single sign on procedure, and wherein cancelling the key information provides a single sign on logout function by deleting keys associated with the user at both the bootstrapping server function (54) and the network application function (58).

10. The method of any of claims 1 to 9, wherein the providing over the interface between the bootstrapping server ² function (54) and the network application function (58) comprises providing over Zn interface of Generic Bootstrapping Architecture (GBA) defined by the 3GPP.

11. A method for single sign on logging-out for use in a generic bootstrapping architecture (GBA) comprising:
sending a key revocation message to a network so that it can be provided (100) over an interface (64) otherwise defined for sharing key acquisition information between a bootstrapping server function and a network application function, one of the functions having collocated with it an identity provider (70, 74), the identity provider being enabled for communication within an identity management system in order to manage identity information and provide assertions of authentication to service providers, in order that key information associated with the key revocation message is cancelled (110) at at least one of the bootstrapping server function (54) and the network application function (58) providing the key revocation message.

12. A computer program product comprising code means adapted to produce the steps of any one of claims 1 to 11 when loaded into the memory of a computer.

13. An apparatus (54, 58) for single sign on logging-out in a generic bootstrapping architecture (GBA) comprising:
means for providing a request for key revocation over an interface otherwise defined for sharing key acquisition information between a bootstrapping server function and a network application function, one of the functions having collocated with it an identity provider (70, 74), the identity provider being enabled for communication within an identity management system in order to manage identity information and provide assertions of authentication to service providers; and
means for cancelling (55, 59) at at least one of the bootstrapping server function (54) and the network application function (58) providing the key revocation message, key information associated with the request for key revocation.

14. An apparatus of claim 13, wherein providing the request for key revocation comprises communicating a key cancellation message from the bootstrapping server function (54) in response to a user initiated request.

15. An apparatus of claim 14, further comprising means for communicating the key cancellation message to at least one different network application function in response to the request, wherein the request comprises an indication of the user request for cancellation of an identified key received from the network application function (58) and cancellation of the key information at the bootstrapping server function (54).

16. An apparatus of claim 13, wherein providing the request for key revocation comprises communicating the request for key revocation from the network application function (58) in response to receipt of a user initiated request indicative of a key to be revoked, the network application function being associated with the service using the key to be revoked.

17. A user equipment apparatus (50) for single sign on logging-out in a generic bootstrapping architecture (GBA) comprising:
means for sending a key revocation message to a network so that it is provided (100) over an interface (64) otherwise defined for sharing key acquisition information between a bootstrapping server function and a network application function, one of the functions having collocated with it an identity provider (70, 74), the identity provider being enabled for communication within an identity management system in order to manage identity information and provide assertions of authentication to service providers, in order that key information associated with the key revocation message is cancelled (110) at at least one of the bootstrapping server function (54) and the network application function (58) providing the key revocation message.

## Patentansprüche

1. Verfahren zum Single-Sign-On-Abmelden zur Verwendung in einer generischen Bootstrapping-Architektur (GBA), umfassend:
Bereitstellen (100) einer Schlüsselwiderrufsnachricht über eine Schnittstelle (64), die ansonsten für den Austausch von Schlüsselerfassungsinformationen zwischen einer Bootstrapping-Serverfunktion und einer Netzwerkanwendungsfunktion definiert ist, wobei zusammen mit einer der Funktionen ein Identity Provider (70, 74) angeordnet ist, wobei der Identity Provider für die Kommunikation innerhalb eines Identitätsmanagementsystems aktiviert ist, um Identitätsinformationen zu verwalten und Authentifizierungsaussagen für Service Provider bereitzustellen; und
Aufheben (110) an der Bootstrapping-Serverfunktion (54) und/oder der Netzwerkanwendungsfunktion (58), welche die Schlüsselwiderrufsnachricht bereitstellen, von mit der Schlüsselwiderrufsnachricht verbundenen Schlüsselinformationen.

2. Verfahren nach Anspruch 1, wobei das Bereitstellen der Schlüsselwiderrufsnachricht das Kommunizieren einer Schlüsselaufhebungsnachricht von der Bootstrapping-Serverfunktion (54) in Reaktion auf eine vom Benutzer initiierte Anforderung umfasst.

3. Verfahren nach Anspruch 2, wobei das Bereitstellen der Schlüsselwiderrufsnachricht das Kommunizieren der Schlüsselaufhebungsnachricht an mindestens eine unterschiedliche Netzwerkanwendungsfunktion in Reaktion auf eine Anzeige einer Benutzeranforderung zur Aufhebung eines identifizierten Schlüssels, der von der Netzwerkanwendungsfunktion (58) empfangen wird, und die Aufhebung der Schlüsselinformationen an der Bootstrapping-Serverfunktion (54) umfasst.

4. Verfahren nach Anspruch 3, ferner umfassend das Bestimmen der mindestens einen unterschiedlichen Netzwerkanwendungsfunktion als eine Netzwerkanwendungsfunktion, die den identifizierten Schlüssel vor der Kommunikation der Schlüsselaufhebungsnachricht besaß.

5. Verfahren nach Anspruch 1, wobei das Bereitstellen der Schlüsselwiderrufsnachricht das Kommunizieren der Schlüsselwiderrufsnachricht von der Netzwerkanwendungsfunktion (58) in Reaktion auf den Empfang einer vom Benutzer initiierten Anforderung umfasst, die einen zu widerrufenden Schlüssel anzeigt, wobei die Netzwerkanwendungsfunktion mit dem Dienst verbunden ist, der den zu widerrufenden Schlüssel verwendet.

6. Verfahren nach einem der Ansprüche 1 bis 5, wobei das Bereitstellen der Schlüsselwiderrufsnachricht das Bereitstellen der Schlüsselwiderrufsnachricht in Reaktion auf eine vom Bediener initiierte Anforderung umfasst, die einen zu widerrufenden Schlüssel anzeigt.

7. Verfahren nach einem der Ansprüche 1 bis 6, wobei das Bereitstellen der Schlüsselwiderrufsnachricht das Kommunizieren einer Schlüsselaufhebungsnachricht in Reaktion auf eine Anzeige einer Kontoaufhebung umfasst, wobei die Bootstrapping-Serverfunktion (54) mit einem Heimnetzwerk des Benutzers verbunden ist, der mit dem aufgehobenen Konto verbunden ist.

8. Verfahren nach einem der Ansprüche 1 bis 7, wobei das Bereitstellen der Schlüsselwiderrufsnachricht das Bereitstellen einer Anforderung zum Widerrufen aller Schlüssel, die mit einem gemäß einem generischen Bootstrapping-Architektur-Framework erzeugten gemeinsamen Geheimnisses verbunden sind, oder das Bereitstellen einer Anforderung zum Widerrufen eines mit dem gemeinsamen Geheimnis verbundenen anwendungsspezifischen Schlüssels umfasst.

9. Verfahren nach einem der Ansprüche 1 bis 8, wobei das Bereitstellen der Schlüsselwiderrufsnachricht das Kommunizieren einer Schlüsselaufhebungsnachricht in Reaktion auf das Empfangen einer Anforderung umfasst, die von einem Service Provider weitergeleitet wird, der mit dem Dienst verbunden ist, von dem der die Anforderung kommunizierende Benutzer abgemeldet werden möchte, bei dem der Dienst durch eine Single-Sign-On-Prozedur zugänglich ist, und wobei das Aufheben der Schlüsselinformationen eine Single-Sign-On-Abmeldefunktion durch Löschen von mit dem Benutzer verbundenen Schlüsseln sowohl bei der Bootstrapping-Serverfunktion (54) als auch bei der Netzwerkanwendungsfunktion (58) bereitstellt.

10. Verfahren nach einem der Ansprüche 1 bis 9, wobei das Bereitstellen über die Schnittstelle zwischen der Bootstrapping-Serverfunktion (54) und der Netzwerkanwendungsfunktion (58) das Bereitstellen über die Zn-Schnittstelle der generischen Bootstrapping-Architektur (GBA) umfasst, die durch das 3GPP definiert ist.

11. Verfahren zum Single-Sign-On-Abmelden zur Verwendung in einer generischen Bootstrapping-Architektur (GBA), umfassend:
Senden einer Schlüsselwiderrufsnachricht an ein Netzwerk, sodass sie über eine Schnittstelle (64) bereitgestellt (100) werden kann, die ansonsten für den Austausch von Schlüsselerfassungsinformationen zwischen einer Bootstrapping-Serverfunktion und einer Netzwerkanwendungsfunktion definiert ist, wobei zusammen mit einer der Funktionen ein Identity Provider (70, 74) angeordnet ist, wobei der Identity Provider für die Kommunikation innerhalb eines Identitätsmanagementsystems aktiviert ist, um Identitätsinformationen zu verwalten und Authentifizierungsaussagen für Service Provider bereitzustellen, damit mit der Schlüsselwiderrufsnachricht verbundene Schlüsselinformationen an der Bootstrapping-Serverfunktion (54) und/oder der Netzwerkanwendungsfunktion (58), welche die Schlüsselwiderrufsnachricht bereitstellen, aufgehoben (110) werden.

12. Computerprogrammprodukt, umfassend Codemittel, die geeignet sind, die Schritte nach einem der Ansprüche 1 bis 11 zu erzeugen, wenn sie in den Speicher eines Computers geladen werden.

13. Vorrichtung (54, 58) zum Single-Sign-On-Abmelden in einer generischen Bootstrapping-Architektur (GBA), umfassend:
Mittel zum Bereitstellen einer Anforderung für den Schlüsselwiderruf über eine Schnittstelle, die ansonsten für den Austausch von Schlüsselerfassungsinformationen zwischen einer Bootstrapping-Serverfunktion und einer Netzwerkanwendungsfunktion definiert ist, wobei zusammen mit einer der Funktionen ein Identity Provider (70, 74) angeordnet ist, wobei der Identity Provider für die Kommunikation innerhalb eines Identitätsmanagementsystems aktiviert ist, um Identitätsinformationen zu verwalten und Authentifizierungsaussagen für Service Provider bereitzustellen; und
Mittel zum Aufheben (55, 59), an der Bootstrapping-Serverfunktion (54) und/oder der Netzwerkanwendungsfunktion (58), welche die Schlüsselwiderrufsnachricht bereitstellen, von mit der Anforderung für den Schlüsselwiderruf verbundenen Schlüsselinformationen.

14. Vorrichtung nach Anspruch 13, wobei das Bereitstellen der Anforderung für den Schlüsselwiderruf das Kommunizieren einer Schlüsselaufhebungsnachricht von der Bootstrapping-Serverfunktion (54) in Reaktion auf eine vom Benutzer initiierte Anforderung umfasst.

15. Vorrichtung nach Anspruch 14, ferner umfassend Mittel zum Kommunizieren der Schlüsselaufhebungsnachricht an mindestens eine unterschiedliche Netzwerkanwendungsfunktion in Reaktion auf die Anforderung, wobei die Anforderung eine Anzeige der Benutzeranforderung zur Aufhebung eines identifizierten Schlüssels, der von der Netzwerkanwendungsfunktion (58) empfangen wird, und die Aufhebung der Schlüsselinformationen an der Bootstrapping-Serverfunktion (54) umfasst.

16. Vorrichtung nach Anspruch 13, wobei das Bereitstellen der Anforderung für den Schlüsselwiderruf das Kommunizieren der Anforderung für den Schlüsselwiderruf von der Netzwerkanwendungsfunktion (58) in Reaktion auf den Empfang einer vom Benutzer initiierten Anforderung umfasst, die einen zu widerrufenden Schlüssel anzeigt, wobei die Netzwerkanwendungsfunktion mit dem Dienst verbunden ist, der den zu widerrufenden Schlüssel verwendet.

17. Benutzergerätevorrichtung (50) zum Single-Sign-On-Abmelden in einer generischen Bootstrapping-Architektur (GBA), umfassend:
Mittel zum Senden einer Schlüsselwiderrufsnachricht an ein Netzwerk, sodass sie über eine Schnittstelle (64) bereitgestellt (100) wird, die ansonsten für den Austausch von Schlüsselerfassungsinformationen zwischen einer Bootstrapping-Serverfunktion und einer Netzwerkanwendungsfunktion definiert ist, wobei zusammen mit einer der Funktionen ein Identity Provider (70, 74) angeordnet ist, wobei der Identity Provider für die Kommunikation innerhalb eines Identitätsmanagementsystems aktiviert ist, um Identitätsinformationen zu verwalten und Authentifizierungsaussagen für Service Provider bereitzustellen, damit mit der Schlüsselwiderrufsnachricht verbundene Schlüsselinformationen an der Bootstrapping-Serverfunktion (54) und/oder der Netzwerkanwendungsfunktion (58), welche die Schlüsselwiderrufsnachricht bereitstellen, aufgehoben (110) werden.

## Revendications

1. Procédé pour une fermeture de session à signature unique pour une utilisation dans une architecture d'amorçage générique (GBA) comprenant :
la fourniture (100) d'un message de révocation de clé sur une interface (64) autrement définie pour partager une information d'acquisition de clé entre une fonction de serveur d'amorçage et une fonction d'application réseau, une des fonctions ayant, colocalisé avec elle, un fournisseur (70, 74) d'identité, le fournisseur d'identité étant activé pour une communication au sein d'un système de gestion d'identité afin de gérer une information d'identité et fournir des assertions d'authentification à des fournisseurs de services ; et
l'annulation (110), au niveau d'au moins une de la fonction de serveur d'amorçage (54) et de la fonction d'application réseau (58) fournissant le message de révocation de clé, d'une information de clé associée avec le message de révocation de clé.

2. Procédé selon la revendication 1, dans lequel la fourniture du message de révocation de clé comprend la communication d'un message d'annulation de clé depuis la fonction de serveur d'amorçage (54) en réponse à une demande initiée par un utilisateur.

3. Procédé selon la revendication 2, dans lequel la fourniture du message de révocation de clé comprend la communication du message d'annulation de clé à au moins une fonction d'application réseau différente en réponse à une indication d'une demande d'utilisateur pour l'annulation d'une clé identifiée reçue de la fonction d'application réseau (58) et l'annulation de l'information de clé au niveau de la fonction de serveur d'amorçage (54).

4. Procédé selon la revendication 3, comprenant en outre la détermination de l'au moins une fonction d'application réseau différente pour être une fonction d'application réseau ayant la clé identifiée avant la communication du message d'annulation de clé.

5. Procédé selon la revendication 1, dans lequel la fourniture du message de révocation de clé comprend la communication du message de révocation de clé depuis la fonction d'application réseau (58) en réponse à la réception d'une demande initiée par un utilisateur indicatrice d'une clé devant être révoquée, la fonction d'application réseau étant associée avec le service utilisant la clé devant être révoquée.

6. Procédé selon l'une quelconque des revendications 1 à 5, dans lequel la fourniture du message de révocation de clé comprend la fourniture du message de révocation de clé en réponse à une demande initiée par un opérateur indicatrice d'une clé devant être révoquée.

7. Procédé selon l'une quelconque des revendications 1 à 6, dans lequel la fourniture du message de révocation de clé comprend la communication d'un message d'annulation de clé en réponse à une indication d'une annulation de compte, la fonction de serveur d'amorçage (54) étant associée avec un réseau domestique de l'utilisateur associé avec le compte annulé.

8. Procédé selon l'une quelconque des revendications 1 à 7, dans lequel la fourniture du message de révocation de clé comprend la fourniture d'une demande de révocation de toutes les clés associées avec un secret partagé généré en vertu d'un cadre d'architecture d'amorçage générique ou la fourniture d'une demande de révocation d'une clé spécifique à une application associée avec le secret partagé.

9. Procédé selon l'une quelconque des revendications 1 à 8, dans lequel la fourniture du message de révocation de clé comprend la communication d'un message d'annulation de clé en réponse à la réception d'une demande redirigée d'un fournisseur de services associé avec le service pour lequel l'utilisateur communiquant la demande désire fermer la session, dans lequel le service est accessible par une procédure à signature unique, et dans lequel l'annulation de l'information de clé fournit une fonction de fermeture de session à signature unique en supprimant des clés associées avec l'utilisateur au niveau à la fois de la fonction de serveur d'amorçage (54) et de la fonction d'application réseau (58).

10. Procédé selon l'une quelconque des revendications 1 à 9, dans lequel la fourniture sur l'interface entre la fonction de serveur d'amorçage (54) et la fonction d'application réseau (58) comprend la fourniture sur une interface Zn d'architecture d'amorçage générique (GBA) définie par le 3GPP.

11. Procédé pour une fermeture de session à signature unique pour une utilisation dans une architecture d'amorçage générique (GBA) comprenant :
l'envoi d'un message de révocation de clé à un réseau de manière à ce qu'il puisse être fourni (100) sur une interface (64) autrement définie pour partager une information d'acquisition de clé entre une fonction de serveur d'amorçage et une fonction d'application réseau, une des fonctions ayant, colocalisé avec elle, un fournisseur (70, 74) d'identité, le fournisseur d'identité étant activé pour une communication au sein d'un système de gestion d'identité afin de gérer une information d'identité et fournir des assertions d'authentification à des fournisseurs de services, afin que l'information de clé associée avec le message de révocation de clé soit annulée (110) au niveau d'au moins une de la fonction de serveur d'amorçage (54) et de la fonction d'application réseau (58) fournissant le message de révocation de clé.

12. Produit de programme informatique comprenant un moyen de code adapté à produire les étapes selon l'une quelconque des revendications 1 à 11 lorsqu'il est chargé dans la mémoire d'un ordinateur.

13. Appareil (54, 58) pour une fermeture de session à signature unique dans une architecture d'amorçage générique (GBA) comprenant :
un moyen pour fournir une demande de révocation de clé sur une interface autrement définie pour partager une information d'acquisition de clé entre une fonction de serveur d'amorçage et une fonction d'application réseau, une des fonctions ayant, colocalisé avec elle, un fournisseur (70, 74) d'identité, le fournisseur d'identité étant activé pour une communication au sein d'un système de gestion d'identité afin de gérer une information d'identité et fournir des assertions d'authentification à des fournisseurs de services ; et
un moyen pour annuler (55, 59), au niveau d'au moins une de la fonction de serveur d'amorçage (54) et de la fonction d'application réseau (58) fournissant le message de révocation de clé, une information de clé associée avec la demande de révocation de clé.

14. Appareil selon la revendication 13, dans lequel la fourniture de la demande de révocation de clé comprend la communication d'un message d'annulation de clé depuis la fonction de serveur d'amorçage (54) en réponse à une demande initiée par un utilisateur.

15. Appareil selon la revendication 14, comprenant en outre un moyen pour communiquer le message d'annulation de clé à au moins une fonction d'application réseau différente en réponse à la demande, dans lequel la demande comprend une indication de la demande d'utilisateur d'annulation d'une clé identifiée reçue de la fonction d'application réseau (58) et de l'annulation de l'information de clé au niveau de la fonction de serveur d'amorçage (54).

16. Appareil selon la revendication 13, dans lequel la fourniture de la demande de révocation de clé comprend la communication de la demande de révocation de clé depuis la fonction d'application réseau (58) en réponse à la réception d'une demande initiée par un utilisateur indicatrice d'une clé devant être révoquée, la fonction d'application réseau étant associée avec le service utilisant la clé devant être révoquée.

17. Appareil d'équipement utilisateur (50) pour une fermeture de session à signature unique dans une architecture d'amorçage générique (GBA) comprenant :
un moyen pour envoyer un message de révocation de clé à un réseau de manière à ce qu'il soit fourni (100) sur une interface (64) autrement définie pour partager une information d'acquisition de clé entre une fonction de serveur d'amorçage et une fonction d'application réseau, une des fonctions ayant, colocalisé avec elle, un fournisseur (70, 74) d'identité, le fournisseur d'identité étant activé pour une communication au sein d'un système de gestion d'identité afin de gérer une information d'identité et fournir des assertions d'authentification à des fournisseurs de services, afin que l'information de clé associée avec le message de révocation de clé soit annulée (110) au niveau d'au moins une de la fonction de serveur d'amorçage (54) et de la fonction d'application réseau (58) fournissant le message de révocation de clé.
